# EUROPEAN PATENT APPLICATION

(11) **EP 4 676 036 A1**
(43) Date of publication of application: **07.01.2026**
(21) Application number: 24306078.7
(22) Date of filing: 02.07.2024
(51) Int. Cl.: H04N 19/11, H04N 19/593

(54) **UNEQUAL OFFSET MULTIPLE REFERENCE LINE (MRL) FOR INTRA PREDICTION**

(71) Applicant: InterDigital CE Patent Holdings, SAS, 75017 Paris (FR)
(72) Inventor: RATH, Gagan Bihari, 35000 RENNES (FR); DUMAS, Thierry, 35700 RENNES (FR); REUZE, Kevin, 35700 RENNES (FR)
(74) Representative: Vossius & Partner Patentanwälte Rechtsanwälte mbB

(57) **Abstract**

Systems and methods for improved MRL and TMRL intra prediction, and particularly, the use of unequal offset reference lines in MRL and TMRL to improve intra prediction. In some implementations, the top reference arrays and left reference arrays may have unequal offsets from a target block. Because the top and left reference arrays can have different offsets, there are many more possible combinations for reference samples. The best pair of top and left reference arrays may be signaled with a suitable encoding scheme.

## Description

### TECHNICAL FIELD

The present embodiments generally relate to systems and methods for video encoding and decoding. In particular, the present disclosure is directed to systems and methods for Multiple Reference Line (MRL) intra prediction.

### BACKGROUND

Multiple Reference Line (MRL) intra prediction is an intra prediction tool in Versatile Video Coding (VVC) and Enhanced Compression Model (ECM) where multiple layers of reference samples may be used for predicting a block. The reference samples in any layer normally consist of already decoded causal samples on the left and top of a block. The reference layers, which may be referred to as reference lines, are at specific offset distance from a target block. The top and the left reference arrays constituting a reference line are located at the same offset from the block.

### SUMMARY

In some aspects, the present disclosure is directed to implementations of systems and methods for improved MRL intra prediction and template based MRL (TMRL) intra prediction, and particularly, the use of unequal offset reference lines in MRL and TMRL to improve intra prediction. In some implementations, the top reference arrays and left reference arrays may have unequal offsets from a target block. Because the top and left reference arrays can have different offsets, there are many more possible combinations for reference samples. The best pair of top and left reference arrays may be signaled as in MRL or TMRL with a suitable encoding scheme.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1 illustrates a block diagram of an embodiment of video encoder in which various aspects of the embodiments may be implemented.
FIG. 2 illustrates a block diagram of an embodiment of video encoder in which various aspects of the embodiments may be implemented.
FIG. 3 illustrates a block diagram of a system within which aspects of the present embodiments may be implemented;
FIG. 4 illustrates an example of MRL for intra-prediction in VVC;
FIG. 5 illustrates an example of a template area for TMRL;
FIG. 6 illustrates an example of MRL with reference arrays having unequal offsets;
FIG. 7 illustrates an example of MRL with reference arrays having unequal offsets;
FIG. 8 illustrates the 65 regular prediction modes in VVC;
FIG. 9A illustrates an example of MRL with reference arrays having equal offsets for a positive vertical mode in a first embodiment;
FIG. 9B illustrates an example of MRL with reference arrays having unequal offsets for a positive vertical mode in a first embodiment;
FIG. 10A illustrates an example of MRL with reference arrays having equal offsets for a positive vertical mode in a second embodiment;
FIG. 10B illustrates an example of MRL with reference arrays having unequal offsets for a positive vertical mode in a second embodiment;
FIG. 11A illustrates an example of MRL with reference arrays having equal offsets for a negative vertical mode in a first embodiment;
FIG. 11B illustrates an example of MRL with reference arrays having unequal offsets for a negative vertical mode in a first embodiment;
FIG. 12A illustrates an example of MRL with reference arrays having equal offsets for a negative vertical mode in a second embodiment;
FIG. 12B illustrates an example of MRL with reference arrays having unequal offsets for a negative vertical mode in a second embodiment;
FIG. 13 is a flowchart which illustrates an exemplary procedure for video coding using unequal MRL; and
FIG. 14 is a flowchart which illustrates an exemplary procedure for video coding using unequal MRL.

### DETAILED DESCRIPTION

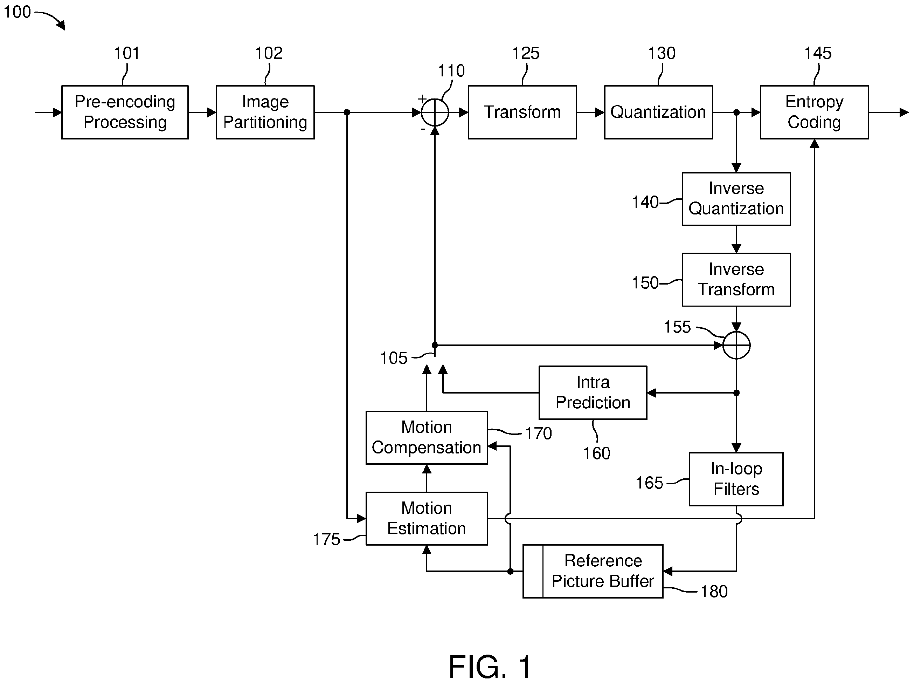

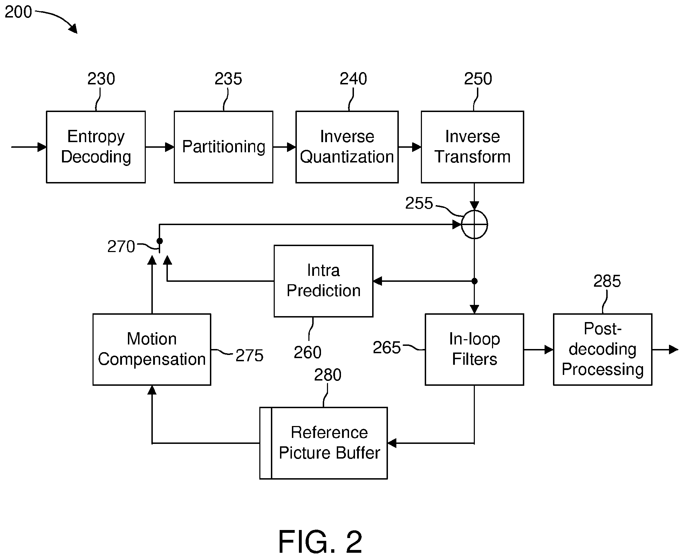

Various methods and other aspects described in this application can be used to modify modules, for example, the motion compensation (170, 275), motion estimation (175), entropy coding, intra (160, 260) and/or decoding modules (145, 230), of a video encoder 100 and decoder 200 as shown in FIG. 1 and FIG. 2. Moreover, the present aspects are not limited to WC or HEVC, and can be applied, for example, to other standards and recommendations, whether pre-existing or future-developed, and extensions of any such standards and recommendations (including WC and HEVC). Unless indicated otherwise, or technically precluded, the aspects described in this application can be used individually or in combination.

Various numeric values are used in the present application, for example. The specific values are for example purposes and the aspects described are not limited to these specific values.

FIG. 1 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

FIG. 2 illustrates a block diagram of a video decoder 200. In the decoder 200, a bitstream is decoded by the decoder elements as described below. Video decoder 200 generally performs a decoding pass reciprocal to the encoding pass as described in FIG. 1 . The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g., conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

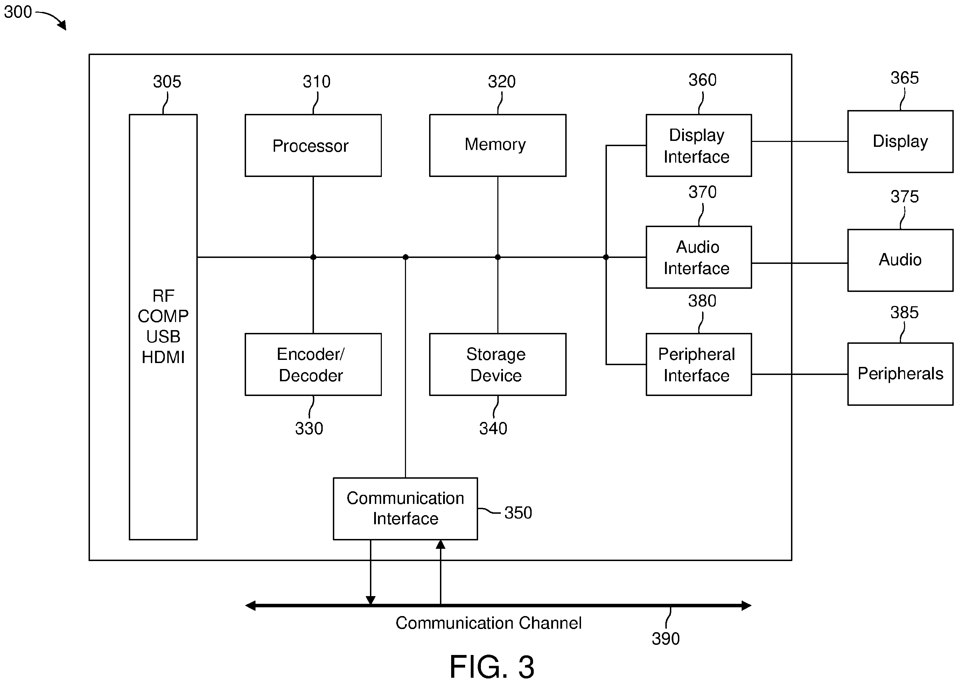

FIG. 3 illustrates a block diagram of an example of a system in which various aspects and embodiments can be implemented. System 300 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 300, singly or in combination, may be embodied in a single integrated circuit, multiple ICs, and/or discrete components. For example, in at least one embodiment, the processing and encoder/decoder elements of system 300 are distributed across multiple ICs and/or discrete components. In various embodiments, the system 300 is communicatively coupled to other systems, or to other electronic devices, via, for example, a communications bus or through dedicated input and/or output ports. In various embodiments, the system 300 is configured to implement one or more of the aspects described in this application.

The system 300 includes at least one processor 310 configured to execute instructions loaded therein for implementing, for example, the various aspects described in this application. Processor 310 may include embedded memory, input output interface, and various other circuitries as known in the art. The system 300 includes at least one memory 320 (e.g., a volatile memory device, and/or a non-volatile memory device). System 300 includes a storage device 340, which may include non-volatile memory and/or volatile memory, including, but not limited to, EEPROM, ROM, PROM, RAM, DRAM, SRAM, flash, magnetic disk drive, and/or optical disk drive. The storage device 340 may include an internal storage device, an attached storage device, and/or a network accessible storage device, as non-limiting examples.

System 300 includes an encoder/decoder module 330 configured, for example, to process data to provide an encoded video/3D object or decoded video/3D object, and the encoder/decoder module 330 may include its own processor and memory. The encoder/decoder module 330 represents module(s) that may be included in a device to perform the encoding and/or decoding functions. As is known, a device may include one or both of the encoding and decoding modules. Additionally, encoder/decoder module 330 may be implemented as a separate element of system 300 or may be incorporated within processor 310 as a combination of hardware and software as known to those skilled in the art.

Program code to be loaded onto processor 310 or encoder/decoder 330 to perform the various aspects described in this application may be stored in storage device 340 and subsequently loaded onto memory 320 for execution by processor 310. In accordance with various embodiments, one or more of processor 310, memory 320, storage device 340, and encoder/decoder module 330 may store one or more of various items during the performance of the processes described in this application. Such stored items may include, but are not limited to, the input video/3D object, the decoded video/3D object or portions of the decoded video/3D object, the bitstream, matrices, variables, and intermediate or final results from the processing of equations, formulas, operations, and operational logic.

In several embodiments, memory inside of the processor 310 and/or the encoder/decoder module 330 is used to store instructions and to provide working memory for processing that is needed during encoding or decoding. In other embodiments, however, a memory external to the processing device (for example, the processing device may be either the processor 310 or the encoder/decoder module 330) is used for one or more of these functions. The external memory may be the memory 320 and/or the storage device 340, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for coding and decoding operations, such as for instance MPEG-2, HEVC, or VVC.

The input to the elements of system 300 may be provided through various input devices as indicated in block 305. Such input devices include, but are not limited to, (i) an RF portion that receives an RF signal transmitted, for example, over the air by a broadcaster, (ii) a composite input terminal, (iii) a USB input terminal, and/or (iv) an HDMI input terminal.

In various embodiments, the input devices of block 305 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 300 to other electronic devices across USB and/or HDMI connections. It is to be understood that various aspects of input processing, for example, Reed-Solomon error correction, may be implemented, for example, within a separate input processing IC or within processor 310 as necessary. Similarly, aspects of USB or HDMI interface processing may be implemented within separate interface ICs or within processor 310 as necessary. The demodulated, error corrected, and demultiplexed stream is provided to various processing elements, including, for example, processor 310, and encoder/decoder 330 operating in combination with the memory and storage elements to process the data stream as necessary for presentation on an output device.

Various elements of system 300 may be provided within an integrated housing, Within the integrated housing, the various elements may be interconnected and transmit data therebetween using suitable connection arrangement 315, for example, an internal bus as known in the art, including the I2C bus, wiring, and printed circuit boards.

The system 300 includes communication interface 350 that enables communication with other devices via communication channel 390. The communication interface 350 may include, but is not limited to, a transceiver configured to transmit and to receive data over communication channel 390. The communication interface 350 may include, but is not limited to, a modem or network card and the communication channel 390 may be implemented, for example, within a wired and/or a wireless medium.

Data is streamed to the system 300, in various embodiments, using a Wi-Fi network such as IEEE 802.11 . The Wi-Fi signal of these embodiments is received over the communications channel 390 and the communications interface 350 which are adapted for Wi-Fi communications. The communications channel 390 of these embodiments is typically connected to an access point or router that provides access to outside networks including the Internet for allowing streaming applications and other over-the-top communications. Other embodiments provide streamed data to the system 300 using a set-top box that delivers the data over the HDMI connection of the input block 305. Still other embodiments provide streamed data to the system 300 using the RF connection of the input block 305.

The system 300 may provide an output signal to various output devices, including a display 365, speakers 375, and other peripheral devices 385. The other peripheral devices 385 include, in various examples of embodiments, one or more of a stand-alone DVR, a disk player, a stereo system, a lighting system, and other devices that provide a function based on the output of the system 300. In various embodiments, control signals are communicated between the system 300 and the display 365, speakers 375, or other peripheral devices 385 using signaling such as AV.Link, CEC, or other communications protocols that enable device- to-device control with or without user intervention. The output devices may be communicatively coupled to system 300 via dedicated connections through respective interfaces 360, 370, and 380. Alternatively, the output devices may be connected to system 300 using the communications channel 390 via the communications interface 350. The display 365 and speakers 375 may be integrated in a single unit with the other components of system 300 in an electronic device, for example, a television. In various embodiments, the display interface 360 includes a display driver, for example, a timing controller (T Con) chip.

The display 365 and speaker 375 may alternatively be separate from one or more of the other components, for example, if the RF portion of input 305 is part of a separate set-top box. In various embodiments in which the display 365 and speakers 375 are external components, the output signal may be provided via dedicated output connections, including, for example, HDMI ports, USB ports, or COMP outputs.

In the present application, the terms "reconstructed" and "decoded" may be used interchangeably, the terms "encoded" or "coded" may be used interchangeably, the terms "pixel" or "sample" may be used interchangeably, and the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Moreover, the present aspects are not limited to Versatile Video Coding (VVC) and Enhanced Compression Model (ECM), and can be applied, for example, to other standards and recommendations, and extensions of any such standards and recommendations. Unless indicated otherwise, or technically precluded, the aspects described in this application can be used individually or in combination. Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment. Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways.

For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

Multiple Reference Line (MRL) intra prediction is an intra prediction tool in Versatile Video Coding (VVC) and Enhanced Compression Model (ECM) where multiple layers of reference samples are used for predicting a block. The reference samples in any layer normally include already decoded causal samples on the left and top of a block. The reference layers, which may be referred to as reference lines, are at specific offset distance from a target block. That is, the top and the left reference arrays constituting a reference line are located at the same offset from the block. This design constraint can sometimes lead to inefficient prediction, especially for positive angular prediction directions as the position-dependent prediction combination (PDPC) operation is not used with higher order reference lines.

In VVC and ECM, intra prediction is applied in all-intra frames as well as in intra blocks in inter frames, where a target block, called a coding unit (CU), is spatially predicted from the causal neighbor blocks in the same frame (i.e., the blocks on the top and top-right, the blocks on the left and left-bottom, and the top-left block). Based on the decoded pixel values in these blocks, the encoder constructs different predictions for the target block and chooses the one that leads to the best rate-distortion (RD) performance. In VVC, the predictions are tested for 67 prediction modes. The 67 prediction modes include one PLANAR mode (indexed as mode 0), one DC mode (indexed as mode 1), and 65 angular modes. Predictions with angular modes may be based on a single reference line, or can be formulated as a weighted average of the predictions based on two or three adjacent reference lines. This is called multiple reference line (MRL) intra prediction VVC. ECM also supports a related tool called template based MRL (TMRL), which is an extension of MRL, but utilizes a template.

MRL prediction may be used in VVC with an MRL candidate list including two additional reference lines (i.e., {1, 2}). Each of the references lines is tested for prediction with prediction modes from the most probable modes (MPM) list excluding the PLANAR mode. The chosen reference line index is encoded as multiRefldx flag where multiRefldx may be 0, 1, or 2. The prediction is not blended, that is, the prediction mode is based on a single reference line. Furthermore, intra sub-partitions (ISP) is not allowed when multiRefldx is equal to 1 or 2.

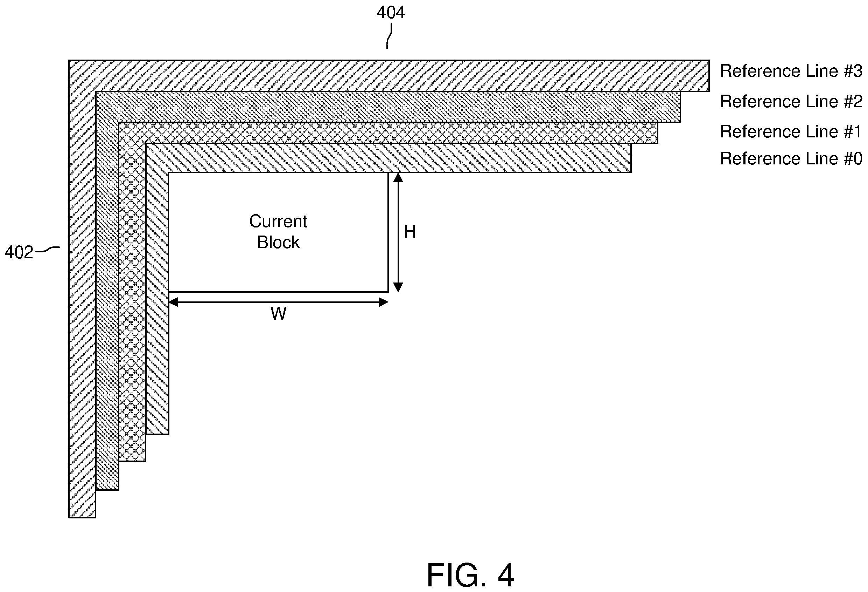

FIG. 4 illustrates an example where four reference lines are used for intra prediction in VVC.. As shown in FIG. 4, reference line #0, reference line #1, reference line #2, and reference line #3 may be used for the intra prediction in VVC. In FIG. 4, reference line #0 has an offset of 0, reference line #1 has an offset of 1, reference line #2 has an offset of 2, and reference line #3 has an offset of 3.

In JVET-Y0116, an extended MRL candidate list was proposed and later adopted into ECM reference software. The extended MRL allows the use of more reference lines for intra prediction. In particular, the MRL candidate list is extended from {1, 2} to {1, 3, 5, 7, 12} for regular intra prediction.

Template based MRL (TMRL), adopted in ECM, provides an extended reference line candidate list: {1, 3, 5, 7, 12}. The restriction on CTU top row is unchanged. The size of the intra-prediction-mode candidate list is 10. The construction of the intra-prediction-mode candidate list is similar to MPM. The differences are that: (1) PLANAR mode is excluded from the proposed intra-prediction-mode candidate list, (2) DC mode is added after five neighboring prediction units' (PUs') modes and decoder side intra mode derivation (DIMD) modes if it is not included, and (3) angular modes with delta angles from ±1 to ±4 are added.

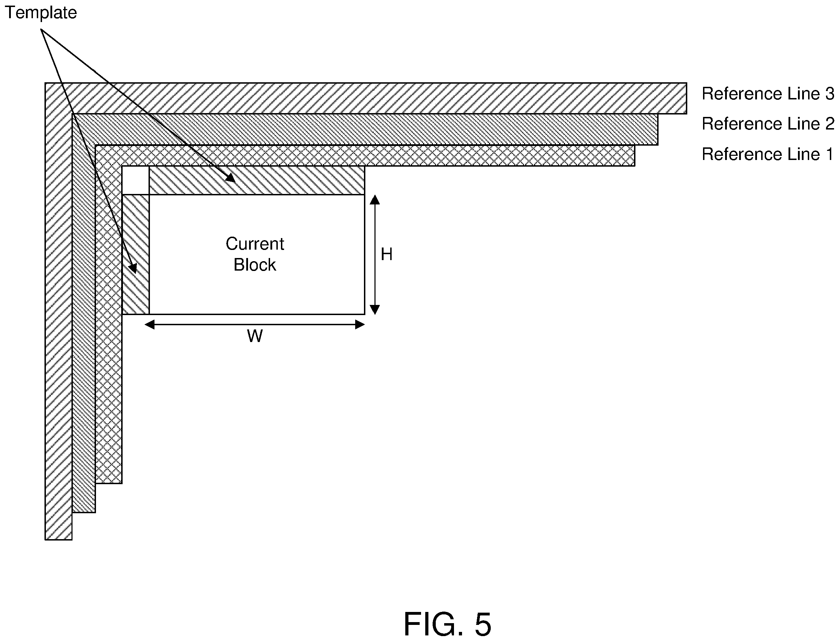

With five extended reference lines and ten prediction modes, there are fifty combinations (i.e., 5 reference lines x 10 prediction modes) of the extended reference line and the allowed intra-prediction modes for a block. Because the extended reference line starts from reference line 1, the area covered by reference line 0 is used for template matching. The sum of absolute difference (SAD) costs over the template area are calculated between the predictions (generated by 50 combinations) and the reconstructions. Only the first twenty combinations with the least cost are pruned from the combinations in an ascending order to form the combination candidate list. FIG. 5 is an example illustration of TMRL.

In TMRL, instead of coding the reference line and the intra mode directly, an index to the TMRL candidate list is coded to indicate which combination of reference line and prediction mode is used for coding the current block. In the proposed TMRL mode, a truncated Golomb-Rice coding with a divisor 4 is employed to code selected combinations from the combination list. The binarization process and the codewords are shown in Table 1 below.

**Table 1 - Binarization Process of the TMRL Index**

| Index | Bin string (prefix) | Bin string (suffix) |
|---|---|---|
| 0 | 0 | 00 |
| 1 | 0 | 01 |
| 2 | 0 | 10 |
| 3 | 0 | 11 |
| 4 | 10 | 00 |
| ... | ... | ... |
| 18 | 1111 | 10 |
| 19 | 1111 | 11 |

As shown in Table 1, the TMRL prediction includes single line predictions. A weighted TMRL has been adopted in ECM. Two predictors generated from two adjacent reference lines are fused by weighted averaging. For angular intra prediction modes, including the single mode case of template based intra mode derivation (TIMD) and intra mode derivation (DIMD), the proposed method derives intra prediction by weighting intra predictions obtained from multiple reference lines represented as *P*=*w₀Pᵢ* + *w₁P₍ᵢ₊₁₎,* where *Pᵢ* is the intra prediction from the default reference line and *P₍ᵢ₊₁₎* is the prediction from the line above the default reference line. The weights are set as *w₀*=3/4 and *w₁*=1/4. If the TMRL list candidate is associated with multiRefldx equal to 1 with prediction mode v, the two predictors are obtained with multiRefldx equal to 1 and 2 with the same prediction mode v and then fused with weights 3/4 and 1/4 respectively.

As shown in FIG. 4, a reference line may include a left reference array 402 and a top reference array 404. Both the left reference array 402 and the top reference array 404 are offset from the target block by the same number of pixels (i.e., the top reference array and left reference array have an equal offset). The offset is equal to the index of a reference line. The reference line immediately next to the block has index 0, the next reference line has index 1 (offset is equal to 1 pixel), the next reference line has index 2 (offset is equal to 2 pixels) and so on.

In an embodiment, the top and the left reference arrays may have unequal offsets. The left reference array may be denoted by m, and the top reference array may be denoted as *n.*

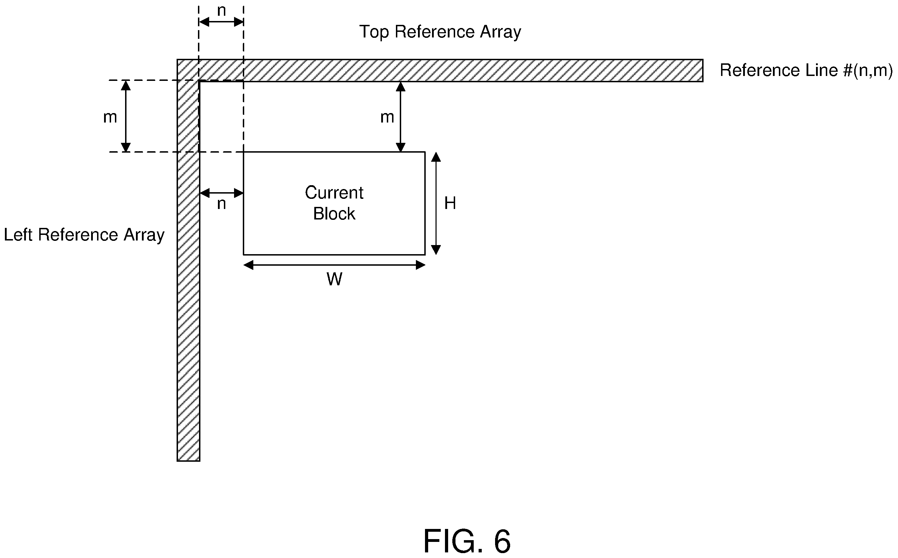

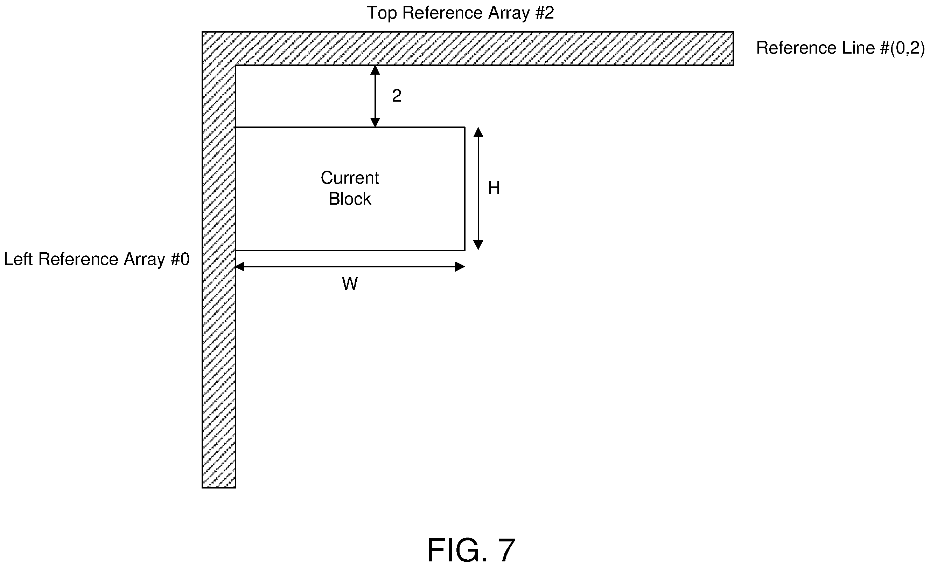

FIG. 6 illustrates an example of reference arrays with unequal offsets. A reference line #(n,m) may include these two reference arrays and may be represented with an index pair such as (n,m). For example, as shown in FIG. 7, a reference line with index (0,2) may include a top reference array with offset 2 and a left reference array that is immediately to the left of the current block (i.e., the left reference array has no offset). Thus, the original reference line #n consisting of reference arrays at equal offset n can be denoted as an index pair (n, n). As shown in FIG. 7, the reference line has an index of (0,2).

With unequal offset of reference lines, the number of combinations of top and left reference arrays can increase quickly depending on the number of allowed reference lines. For example, with five reference lines in the set {1, 3, 5, 7, 12}, the number of possible combinations (m,n) is 25(i.e., 5 top reference arrays x 5 left reference arrays). If the encoder has to check the prediction performance with each reference line, the resulting complexity may be prohibitive.

A two-step approach to allow unequal offsets while minimizing added complexity may be used. In a first step, as in ECM, an encoder may check the RD performance of allowed prediction modes with each reference line with equal offsets. In a second step, the encoder may check the RD performance of the best reference line with unequal offsets and selects the better prediction.

For example, in the first step, similar to ECM, an encoder may compare the RD performance score of the allowed prediction modes with the five reference lines (where each reference lines has an equal offset). Based on the RD performance score, the encoder may select the best prediction mode and the reference line (e.g., if the best combination is (*r*,*p*), *r* may be the reference line and *p* may be the prediction mode).

In the second step, the encoder may first derive, from the best selected reference line (i.e., r), a reference line with an unequal offset. Next, the encoder may perform a prediction with the reference line with an unequal offset and the best prediction mode from the first step (i.e., p) and determine the RD performance of the prediction. Then, the encoder compares the RD performance score determined in the first step with the RD performance score determined in the second step and selects the better prediction.

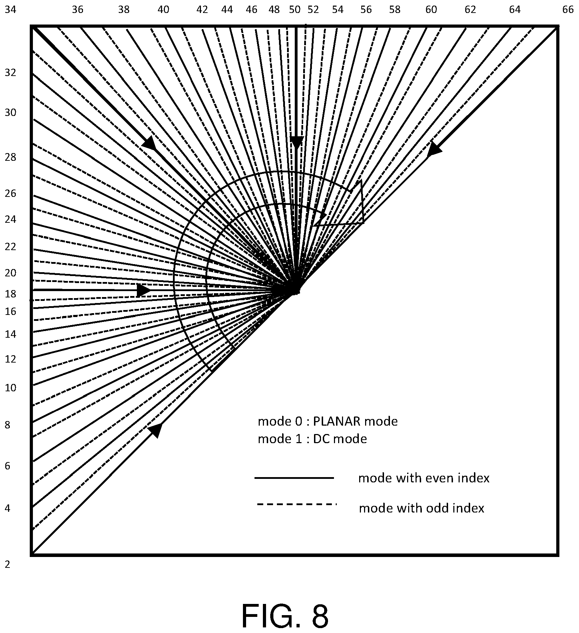

The positive directions in intra prediction refer to the directions from bottom-left side towards top-right, or from top-right towards bottom-left, of a target block. The directions from bottom-left side towards top-right including the purely horizontal direction are termed as positive horizontal and the directions from top-right towards bottom-left including the purely vertical direction are termed as positive vertical directions. The prediction directions from top-left towards bottom-right are termed as negative directions, either horizontal or vertical depending on if a direction is below or over the diagonal direction, respectively. For example, in VVC, the directional modes indexed as *m*, *m*<18, *m* ≠ 0, 1, are horizontal positive, modes indexed as 18 ≤*m*<34, are horizontal negative, modes indexed as 34 ≤*m*<50, are vertical negative, and modes indexed as m≥50 are vertical positive. FIG. 8 illustrates the 65 regular prediction modes in VVC.

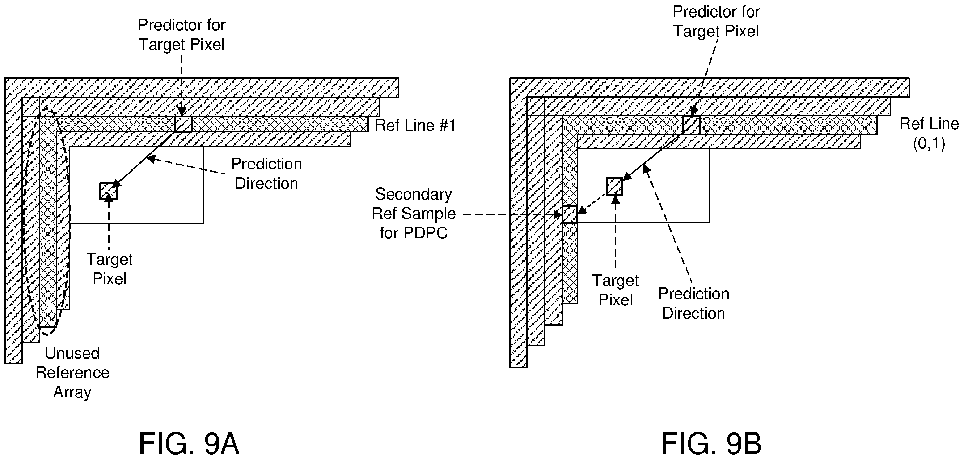

In the case of MRL with multiRefldx > 0, when the intra prediction mode is associated with a positive direction, only one reference array, either the top reference array or the left reference array, may include the main reference array, which is used for the full prediction of a target pixel. In the case of a positive horizontal direction, it is the left reference array and in the case of a positive vertical direction, it is the top reference array. Because the index of the reference line (i.e., multiRefldx is greater than 0), there is no subsequent PDPC operation. Thus, the other reference array constituting the reference line #*n* (i.e., the top reference array for positive horizontal directions, or the left reference array for positive vertical directions), does not serve a purpose. FIG. 9A illustrates reference arrays with an equal offset for a positive vertical direction.

FIG. 9B illustrates reference arrays with unequal offsets for a positive vertical direction. Unequal offset reference arrays may be incorporated in two ways. In one embodiment, for a positive vertical direction with multiRefldx > 0, the encoder may use the top reference array with index multiRefldx, and the left reference array with index 0. Similarly, for a positive horizontal direction with multiRefldx > 0, the encoder may use the top reference array with index 0, and the left reference array with index multiRefldx. After the initial prediction, the encoder may perform PDPC operation using the adjacent reference array on the left (for vertical directions) or the top (for horizontal directions). This is illustrated in FIG. 8B, which illustrates reference arrays with unequal offsets. The encoder compares the original prediction with the proposed one and selects the one that is better in terms of RD performance.

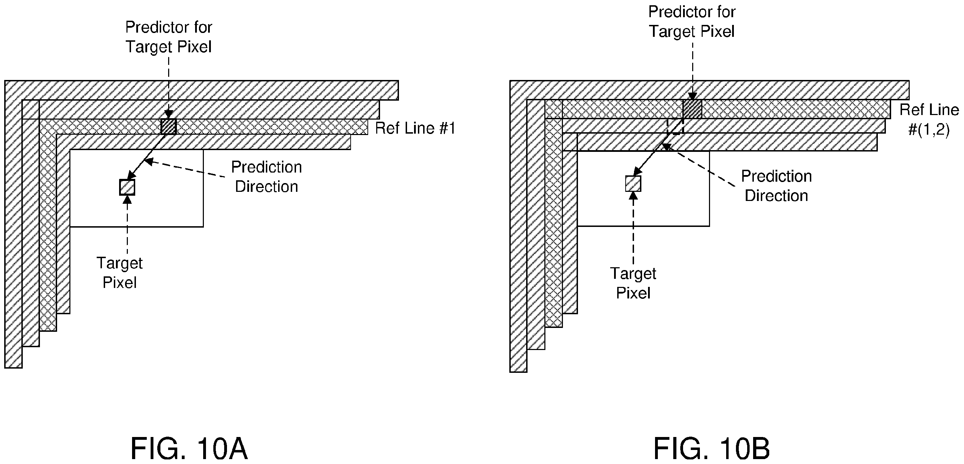

FIG. 10A and FIG. 10B illustrate reference arrays with equal (FIG. 10A) and unequal offsets (FIG. 10B) for a positive vertical mode. Because the left reference array is unused, only the top reference array is changed. As shown in FIG. 10A and FIG. 10B, in another embodiment, for a positive vertical direction with multiRefldx > 0, the encoder may use the top reference array with index multiRefldx+1, and the left reference array with index multiRefldx; Similarly, for a positive horizontal direction with multiRefldx > 0, the encoder may use the top reference array with index multiRefldx, and the left reference array with index multiRefldx+1. The encoder may compare the original prediction with the proposed one and select the one that is better in terms of RD performance.

For predictions along negative directions, depending on the target pixel location in a current block, the predictor sample can lie either on the top reference array, or on the left reference array. In the current ECM, when multiRefldx > 0 and the prediction direction is negative, both the left and the top reference arrays at offset multiRefldx pixels are used for the prediction of the target pixels. Depending on whether the direction is vertical or horizontal, one of the arrays is projected on to the other for convenience of prediction process in constructing the main reference array. In this case, similar to positive prediction directions, unequal offset reference arrays may be incorporated in various methods.

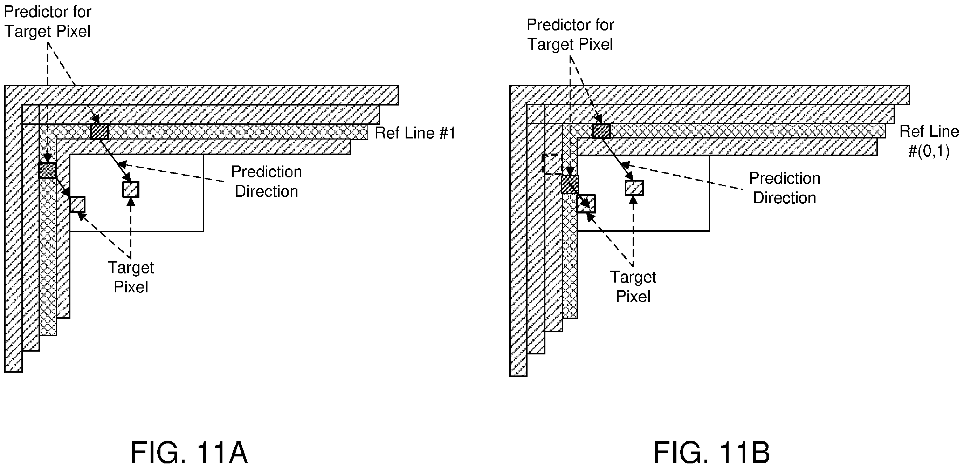

FIG. 11A and FIG. 11B illustrate one embodiment for reference arrays with equal (FIG. 11A) and unequal offsets (FIG. 11B) for a negative vertical mode. As shown in FIG. 11A and FIG. 11B, in one embodiment, for a negative vertical direction with multiRefldx > 0, the encoder may use the top reference array with index multiRefldx or (multiRefldx +1), and the left reference array with index 0. Similarly, for a negative horizontal direction with multiRefldx > 0, the encoder may use the top reference array with index 0, and the left reference array with index multiRefldx or multiRefldx +1. The encoder compares the original prediction with the proposed one and chooses the one which is better in terms of RD performance.

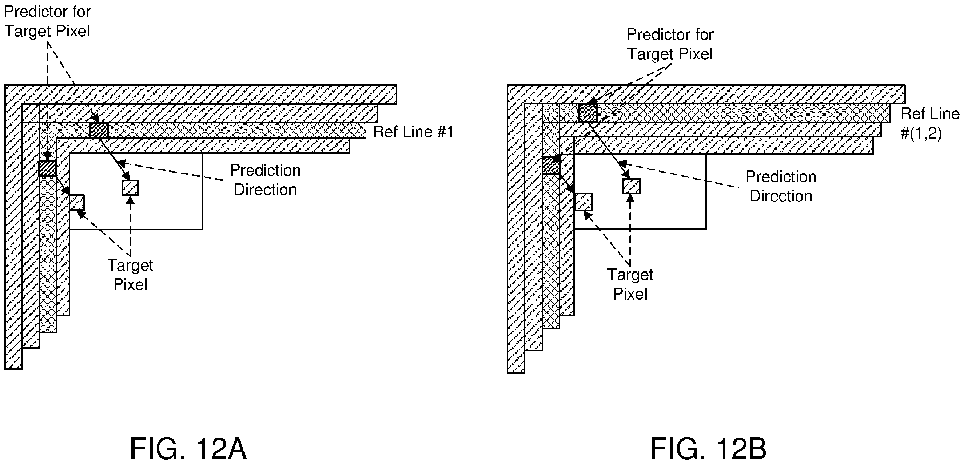

FIG. 12A and FIG. 12B illustrate another embodiment for reference arrays with equal (FIG. 12A) and unequal offsets (FIG. 12B) for a negative vertical mode. As shown in FIG. 12A and FIG. 12B, in another embodiment, the encoder may use another reference line that consists of the same left reference array but the top reference array with index multiRefIdx+1 for vertical modes, or the same top reference array but the left reference array with index multiRefldx+1 for horizontal modes. The encoder compares the original prediction with the proposed one and chooses the one which is better in terms of RD performance.

As in the case of positive directions, in negative directions, if multiRefldx is greater than 0, the encoder may encode a signaling flag called a *mrl_offset_flag* to indicate if equal offset MRL or unequal offset MRL is used. The encoder encodes the flag as "0" in the case of an equal offset and as "1" in the case of an unequal offset. The decoder decodes the multiRefldx flag and if multiRefldx > 0, also decodes the *mrl_offset_flag.* Then depending on the value of the prediction mode index, which it decodes subsequently, it constructs the top and left reference arrays accordingly to be used for the prediction.

For both positive and negative directions, it may be possible to have other unequal offset reference lines even with the two-step approach. In the above description options that can be incorporated in VVC and ECM without modifying the MRL intra prediction in their reference codes significantly are described.

As in MRL, to support reference lines with unequal offsets in TMRL, a two-step approach may be used. In a first step, as in ECM, the TMRL candidate list may be constructed using reference lines with equal offsets. After predicting the template (that consists of the first reference line) with the candidate reference lines and 10 prediction modes, the resulting SAD costs are listed in increasing order and only the first 20 combinations (i.e., reference line index and prediction mode) are used to form the initial combination candidate list.

In a second step, for each candidate combination in the list, the encoder may use a reference line with an unequal offset. The unequal offsets for the reference arrays are selected in the same manner as in the second embodiments for MRL with unequal offset. If the prediction mode is associated with a positive direction, the reference arrays are selected as in the embodiment explained in relation to FIG. 10A and FIG. 10B. And, if the prediction mode is associated with a negative direction, the reference arrays are selected as in the embodiment as explained in relation to FIG. 12A and FIG. 12B. Using these reference arrays, the encoder predicts the template and computes the resulting SAD. If the SAD is greater than that of the 20th candidate combination, then the encoder checks the next candidate in the list with unequal offsets for the reference arrays. Otherwise, the encoder may update the list with the tested candidate after removing the twentieth candidate and reordering the candidates in increasing order of SAD, and then checks the next candidate in the original list. Note that, the encoder does not select the reference arrays as in Embodiment 1 as the first reference line is used as a template in TMRL, which is predicted using other reference lines. The encoding of the candidate combinations in the TMRL list remains unchanged. The decoder performs exactly the same steps to form the TMRL candidate list in two steps if it decodes the *TMRLflag* (i.e., the flag that indicates that TMRL mode is used for prediction of a block) to be 1.

As in weighted TMRL, the prediction of a block with unequal offsets of reference lines can be averaged with weights. If (m,n) denotes the index pair of a reference line where m is the left reference array index and n is the top reference array index, then the next reference line has the index pair (m+1, n+1). Thus the two predictors, for the same prediction mode, from adjacent reference lines (m,n) and (m+1, n+1) can be fused by weighted averaging. The final prediction can be represented as P = *w₀P_{m,n}* + *w₁P*_{*m*+*1*,*n*+*1*}, where *P*_{*m*,*n*} is the intra prediction from the default reference line in the list and *P*_{*m*+*1,n*+*1*} is the prediction from the line above the default reference line. The weights may be set as *w₀*=3/4 and *w₁*=1/4.

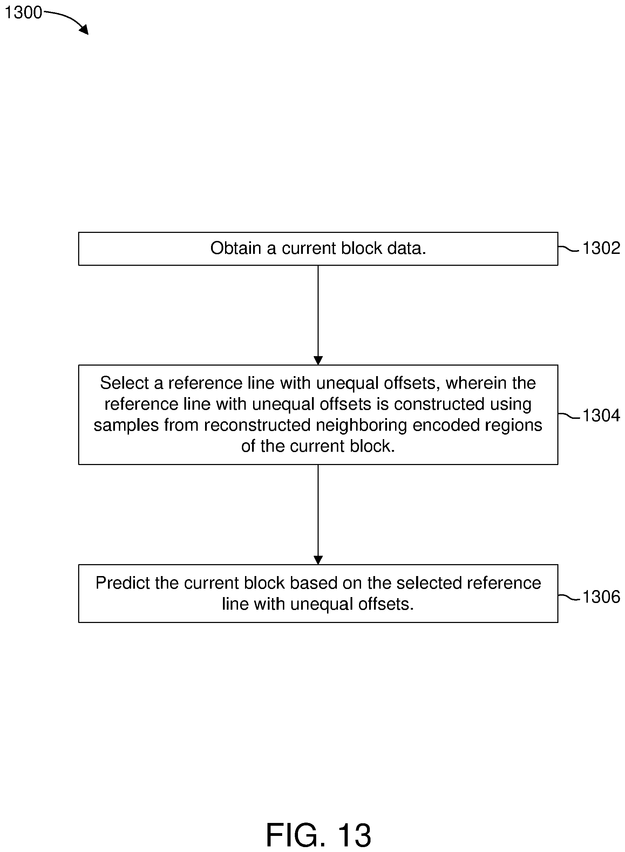

FIG. 13 is a flowchart illustrating an exemplary procedure 1300 for video coding using unequal MRL. Procedure 1300 may be performed by a video coder, including a video encoder or a video decoder. At 1302, the video coder may obtain a current block data. At 1304, the video coder may select a reference line with unequal offsets, wherein the reference line with unequal offsets is constructed using samples from reconstructed neighboring encoded regions of the current block. At 1306, the video coder may predict the current block based on the selected reference line with unequal offsets. The procedure 1300 may also include obtaining an intra prediction mode.

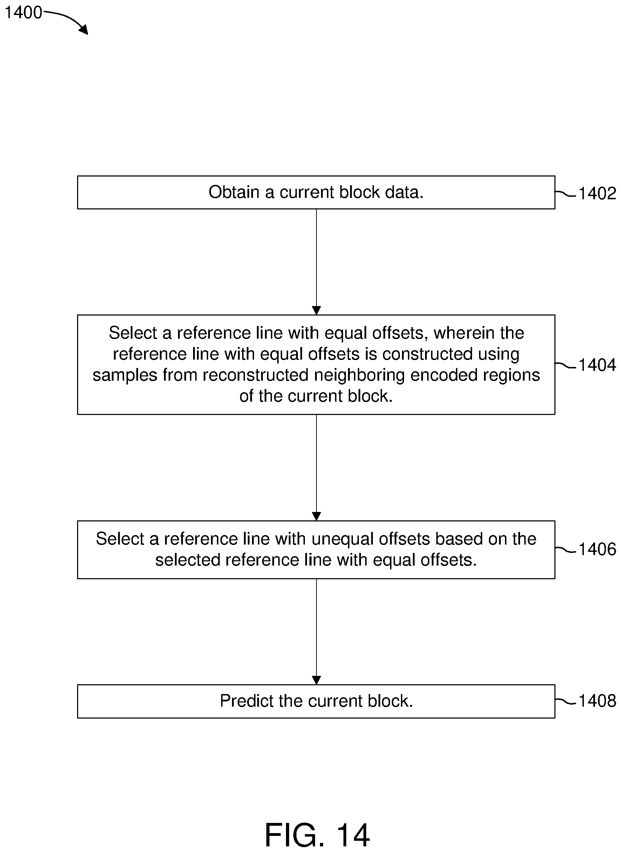

FIG. 14 is a flowchart illustrating an exemplary procedure 1400 for video coding using unequal MRL. Procedure 1400 may be performed by a video coder, including a video encoder or video decoder. At 1402, the video coder may obtain a current block data. At 1404, the video coder may select a reference line with equal offsets, wherein the reference line with equal offsets is constructed using samples from reconstructed neighboring encoded regions of the current block. At 1406, the video coder may select a reference line with unequal offsets based on the selected reference line with equal offsets. At 1408, the video coder may predict the current block. The prediction of the current block at 1408 may be based on the selected reference line with unequal offsets. The prediction of the current block at 1408 may be based on selecting a better prediction between the reference lines with equal offsets and the selected reference lines with unequal offsets, where the better prediction may be based on a RD performance. The procedure 1400 may also include obtaining an intra prediction mode.

A video encoder may be configured to perform the procedure 1300 and/or procedure 1400. A video decoder may be configured to perform the procedure 1300 and/or procedure 1400. A media consumption device (e.g., television, computer, mobile phone, tablet, etc.,) may be configured to perform the procedure 1300 and/or procedure 1400. A network device may be configured to perform the procedure 1300 and/or procedure 1400. An integrated circuit may be configured to perform the procedure 1300 and/or procedure 1400. A non-transitory computer readable medium comprising instructions which, when executed by a processing device, can cause the processing device perform procedure 1300 and/or procedure 1400.

## Claims

1. A method for video coding comprising:
obtaining a current block data;
selecting a reference line with unequal offsets, wherein the reference line with unequal offsets is constructed using samples from reconstructed neighboring encoded regions of the current block; and
predicting the current block based on the selected reference line with unequal offsets.

2. A method for video coding comprising:
obtaining a current block data;
selecting a reference line with equal offsets, wherein the reference line with equal offsets is constructed using samples from reconstructed neighboring encoded regions of the current block;
selecting a reference line with unequal offsets based on the selected reference line with equal offsets; and
predicting the current block.

3. The method of claim 2, wherein the prediction of the current block is based on the selected reference line with unequal offsets.

4. The method of claim 2, wherein the prediction of the current block is based on selecting a better prediction between the reference lines with equal offsets and the selected reference lines with unequal offsets.

5. The method of claim 4, wherein the selection of the better prediction is based on a rate-distortion performance.

6. The method of claim 2, further comprising:
encoding an indicator flag, wherein the indicator flag indicates whether to select the reference line with equal offsets or the reference line with unequal offsets.

7. The method of claim 6, wherein if the indicator flag has a value of 1, the reference line with equal offset is selected and if the indicator flag has a value of 0, the reference line with unequal offsets is selected.

8. The method of claims 1 through 6, further comprising:
obtaining an intra prediction mode.

9. A video encoder configured to perform the method as in any one of claims 1-8.

10. A video decoder configured to perform the method as in any one of claim 1-8.

11. A media consumption device configured to perform the methods in any of claims 1-8.

12. At least one processor operatively connected to at least one transceiver, the at least one processor and at least one transceiver configured to perform the method as in any one of claims 1-7.

13. A network device configured to perform the method as in any one of claims 1-8.

14. An integrated circuit configured to perform the method as in any one of claims 1-8.

15. A non-transitory computer readable medium comprising instructions which when executed by a processing device cause the processing device to perform the method as in any one of claims 1-7.
